# EUROPEAN PATENT SPECIFICATION

(11) **EP 3 365 303 B1**
(45) Date of publication and mention of the grant of the patent: **10.07.2019**
(21) Application number: 16782286.5
(22) Date of filing: 19.10.2016
(51) Int. Cl.: C04B 33/04, C04B 35/18, C04B 35/63, C04B 35/22, C04B 35/622, C04B 35/626, C04B 35/64

(54) **FIRED DIATOMITE INSULATING BODIES**
ISOLIERKÖRPER AUS DIATOMIT
CORPS ISOLANTS EN DIATOMITE

(30) Priority: 20.10.2015 DK 201570678
(43) Date of publication of application: 29.08.2018
(73) Proprietor: Skamol A/S, 8310 Tranbjerg J (DK)
(72) Inventor: VAN LELIEVELD, Alexander, 7800 Skive (DK)
(74) Representative: Inspicos P/S
(86) International application number: PCT/EP2016/075103
(87) International publication number: WO 2017/067989

(56) References cited:
- US-A- 3 793 042
- US-A1- 2011 174 732
- I.D. KASCHCHHEEV, ET. AL: "Production of heat-insulating diatomite articles by a plastic method of molding", REFRACTORIES AND INDUSTRIAL CERAMICS, 29 September 2010 (2010-09-29), pages 18-24, XP002765788, Russia DOI: link.springer.com/content/pdf/10.1007%2Fs1 1148-010-9248-y.pdf
- LOGANINA VALENTINA I ET AL: "Application of activated diatomite for dry lime mixes", CONSTRUCTION AND BUILDING MATERIALS, vol. 65, 1 January 2014 (2014-01-01), pages 29-37, XP028874353, Russia ISSN: 0950-0618, DOI: 10.1016/J.CONBUILDMAT.2014.04.098

## Description

### FIELD OF THE INVENTION

The present invention relates to fired diatomite insulating bodies, typically based on diatomite and a binder, e.g. clay or the like. The insulating bodies have improved properties with respect to mechanical and dimensional stability at high temperatures and low thermal conductivity compared to conventional diatomite insulating bodies.

### BACKGROUND OF THE INVENTION

Fired diatomite insulation bricks have been known for more than 100 years. It was the starting point of insulating fire bricks. Fired diatomite insulation bricks have excellent insulating properties, because of the diatomaceous earth consists of fossilized remains of diatoms, a type of hard-shelled algae. The empty shell remains substantially intact in the insulating brick, creating porosities on the scale of 1-10 µm (microporosity). Heat can be transfered by three different modes: conduction, convection and radiation. At temperatures higher than 700°C the main transfer mode of heat is by radiation, since radiation is proportional to the pore size a smaller pore size will lead to less radiation. This means that a diatomite insulation brick due to the nature of the diatomaceous earth has excellent high temperature insulation properties. However, the diatomite insulation bricks have been limited in use by their relative low heat resistance. The relative low heat resistance is observed when the diatomite insulation bricks are heated to temperatures above 1000°C, where it starts to shrink/contract, due to deterioration of the microporosity of the diatomaceous earth. In most applications, diatomite insulation bricks are used to provide an insulation barrier of some dimension. When individual bricks start to shrink, cracks in the barrier will start to appear. These cracks will compromise the insulating properties of the barrier and will lead to failure of the barrier. Also, the the micro-pore structure will be destroyed. At even higher temperatures >1400°C the bricks will melt and destroy the integrity of the barrier. In many applications another barrier typically referred to as a "refractory layer" closer to the heat source is provided in order to give the barrier mechanical and chemical resistance. This barrier may collapse, if the supporting insulating barrier behind it fails. A destabilisation of the refractory layer can result in hot material penetrating the insulating layer and with that a leakage of hot material, e.g. molten iron or hot clinkers, into the working place.

Current solutions to an insulating fire bricks with temperature resistance of over 1000°C include adding alumina to different clays. Since none of these materials has natural porosities as diatomaceous earth, the porosities are made artificially. The known art i.e. insulating fire products show that it is difficult to make small pores such as is occurring in diatomaceous earth. This makes diatomite insulation bricks better for high temperature usage.

Furthermore the diatomaceous earth can be found and retrieved easily several places around the world, making it a cheap natural resource.

It would therefore be desirable to provide diatomite insulation bricks which can withstand higher temperatures higher than around 1000°C, in particular such as to maintain a low thermal conductivity.

US 2,686,161 discloses granules of diatomaceous earth particles and a ceramic binder like clay, e.g. kaolin or bentonite, e.g. for use as a fluid bed contact material.

US 2,701,240 discloses filter aids from diatomaceous earth having improved properties with respect to water-solubility and acid-solubility and which contain a minimum of non-silicious impurities. The impurities (like iron, aluminium, calcium and magnesium) are removed by first treating the diatomaceous earth with oxy acids of phosphorous or anhydrides, ammonium salts or alkali metal salts thereof, and subsequent washing with acids.

US 4,325,844 discloses a process for the preparation of particulate filter aids from diatomaceous earth by calcination at reduced temperature of a mixture of diatomite, water and optionally a flux (e.g. an alkali metal salt) and whitening agent (e.g. a phosphorous acid or oxy salt thereof like in US 2,701,240).

US 2011/0174732 A1 discloses a process for reducing the level of soluble metals in diatomaceous earth product by treatment with a surface metal blocking agent. The resulting products are used e.g. as filter aid materials.

US 3,793,042 A discloses an insulating, mouldable monolithic insulating material for lining furnaces and a method for its production. The material comprises calcined diatomaceous earth, bentonite or other plastic clay materials and water. Up to 10 parts by weight of expanded perlite (for improving insulating and strengthening characteristics), and up to 10 parts by weight of aluminium phosphate (binding effect) may be added. The generally amorphous diatomaceous earth starting material is calcined at 2,100 °F (1150 °C) or higher prior to mixing with outer ingredients in order to obtain the cristobalite crystalline form, i.e. a high temperature polymorph of silica.

WO 2010/036763 A1 discloses a process for reducing soluble metal levels in diatomaceous earth products by treatment with a dry phosphorous-containing compound and subsequent thermal treatment.

CN 101774817A discloses a diatomite ultra-microporous high-strength heat-insulating heat-preserving firebrick prepared from a 50-70 % of fly ash, 30-50 % of diatomite and an additional foaming agent.

CN 101638324A discloses a light porous heat-insulating refractory material which comprises 15-30 % of binding clay, 3-10 % of mullite fiber, 15-35 % of expanded perlite powder, 15-25 % of inorganic bonding agent, 1.5-3.5 % of waste polystyrene foam balls and the balance of water.

In view of the state of the art there is a desire for expanding the use of fired diatomite insulating bodies to such uses wherein the bodies are exposed to temperatures above 1050°C, such as in the range of 1100-1650°C, e.g. 1100-1500°C, for example in high temperature industries such as iron, base metal, lime, cement, petrochemical and glass industries. In these industries at least in one production step or part the insulation material is exposed to temperatures higher than 1000°C. An example of this could be the steel ladles, where molten iron is kept at temperatures of around 1500°C and insulation layer is exposed to temperatures in the range of 1300-1200°C. Another example would be the insulation in rotary kilns were the clinkers are fired at around 1400°C and the insulation barrier is exposed to temperatures of around 1200°C. Not only should such insulating bodies exhibit a low (preferably at the most 2 %) linear shrinkage, but also a low thermal conductivity.

The use of conventional fired diatomite insulation bricks as insulation barrier in these application would result in failure of the plant due shrinkage of the insulation barrier with the consequences described above.

Conventional insulating bricks with a high content of alumina (Al₂O₃) can withstand temperatures higher than 1050°C. These bricks are made from artificial materials and have pore sizes larger than 10 µm. Diatomite insulation bricks have different distribution of pores, including pores smaller than 10 µm. At temperatures higher than 700°C the main transfer mode of heat is by radiation, since radiation is proportional to the pore size a smaller pore size will lead to less radiation. This means that diatomaceous insulation bricks have a particular use in the field of insulation, but has so far been limited by their relative low maximum service temperature i.e. up to around 1000°C because the micro-pore structure thereof has had a tendency to deteriorate at higher temperature.

### SUMMARY OF THE INVENTION

It has been found by the present inventor that fired diatomite insulating bodies which are able to withstand higher temperatures can be obtained by allowing the combination of the diatomite and the binder (typically a clay) to react with a metal-masking agent, e.g. a phosphate like aluminium phosphate, prior to firing.

Without being bound to any specific theory, it is believed that iron impurities (and possibly also other metal impurities) in the diatomite and binder raw materials is at least in part responsible for the shrinkage at high temperatures (>1000°C) and the melting at even higher temperatures. It is therefore believed that - when the metal-masking agent is allowed to react with the diatomite and binder raw materials - then the iron particles (and other relevant metal particles) are somehow masked and are not capable of fusing the silica thereby creating shrinkage or at even higher temperatures melting of the silica.

Hence, one aspect of the invention relates to fired diatomite insulating bodies, cf. claim 1. In one variant, the fired diatomite insulating body comprises a base material of: (a) 50-95 wt.% of diatomaceous earth, (b) 5-50 wt.% of a binder, and optionally (c) one or more fillers; wherein the content of metals selected from iron (Fe2O3), aluminium (Al2O3), calcium (CaO) and magnesium (MgO) in the base material is at least 0.5 wt.%, and wherein the insulating body further comprises (d) a metal-masking agent, and wherein the molar equivalent ratio between the metal-masking agent and said metals is at least 30:100. In another variant, the fired diatomite insulating body comprises a base material of: (a) 50-95 wt.% of diatomaceous earth, (b) 5-50 wt.% of a binder, and optionally (c) one or more fillers; wherein the content of metals selected from iron (Fe2O3), aluminium (Al2O3), calcium (CaO) and magnesium (MgO) in the base material is at least 0.5 wt.%, and wherein the insulating body further comprises (d) a metal-masking agent, said insulating body exhibiting less than 2 % of shrinkage after heating to 1200°C for 12 hours (EN 1094-6:1999).

Another aspect of the invention relates to new uses of the fired diatomite insulating body specified herein, cf. claim 10.

Still another aspect of the invention relates to a method for the manufacture of the fired diatomite insulating body specified herein, cf. claim 11.

### BRIEF DESCRIPTION OF THE FIGURE

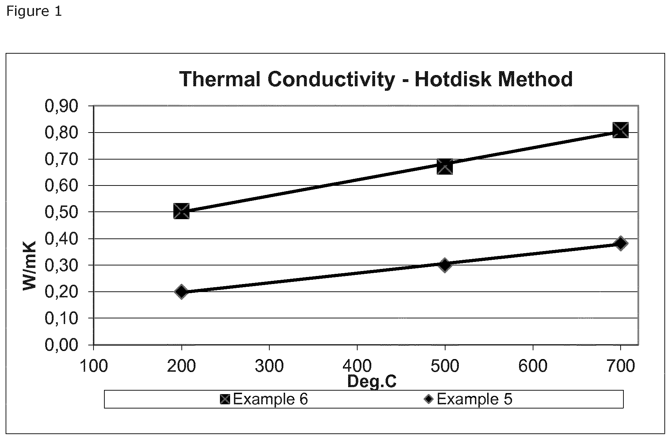

Figure 1 shows the thermal conductivity of the diatomite insulating bricks prepared in Example 5 and Example 6.

### DETAILED DISCLOSURE OF THE INVENTION

### Fired diatomite insulating bodies

As mentioned above, the present invention i.a. provides a fired diatomite insulating body comprising a base material of: (a) diatomaceous earth, (b) a binder, and optionally (c) one or more fillers, and wherein the insulating body further comprises (d) a metal-masking agent.

In the present application, the terms "diatomite" and "diatomaceous earth" are used interchangeably.

It should be understood, that the present invention (in contrast to particulate materials) in particular pertains to insulating bodies having a certain physical size. Hence, the insulating body typically have as volume of at least 100 cm³, such as in the range of 100-40,000 cm³, in particular 2000-4000 cm³. Typically, the insulating body is in the form of a brick, such as a box-shaped body. For such insulating bodies shrinkage is particular critical.

Typically, the insulating body comprises a base material of: (a) 50-95 wt.%, such as 60-90 wt.%, of diatomaceous earth, (b) 5-50 wt.%, such as 10-40 wt.%, of a binder, and optionally (c) one or more fillers. The insulating body further comprises (d) a metal-masking agent.

The invention is particularly useful where the content of metals selected from iron (Fe₂O₃), aluminium (Al₂O₃), calcium (CaO) and magnesium (MgO) in the base material is at least 0.5 wt.%, such as in the range of 0.5-30 wt.%, e.g. in the range of 0.7-25 wt.%, in particular 10-20 wt.%. In important variants, the content of iron is at least 0.5 wt.%, such as in the range of 0.5-20 wt.%, e.g. in the range of 0.7-15 wt.%.

The content of metals selected from iron (Fe₂O₃), aluminium (Al₂O₃), calcium (CaO) and magnesium (MgO) in the base material (i.e. the diatomaceous earth, the binder and any filler) can be determined, e.g. by XRF as described in the Working Examples section, so as to provide a basis for the addition of a suitable amount of the metal-masking agent.

In one variant, the inventive insulating body is characterized by exhibiting less than 2 %, such as less than 1 %, of linear shrinkage after heating to 1200°C for 12 hours (EN 1094-6:1999). Also, in other variants, the temperature tolerance is even higher, e.g. such that the insulating body is characterized by exhibiting less than 2 %, or even less than 1 %, of linear shrinkage after heating to 1250°C, such as heating to 1300°C, or even heating to 1350°C, or even more interesting heating to 1400°C, for 12 hours (EN 1094-6:1999).

In another variant, the inventive insulating body is characterized by a molar equivalent ratio between the metal-masking agent (for example a phosphate) and the combined amount of metals selected from iron (Fe₂O₃), aluminium (Al₂O₃), calcium (CaO) and magnesium (MgO) in the base material of at least 30:100, such as in the range of 30:100 to 150:100, or in the range of 30:100 to 130:100, e.g. in the range of 50:100 to 120:100, in particular in the range of 80:100 to 110:100.

The insulating body is mainly made up of diatomaceous earth (also referred to as diatomite or kieselgur) which is a naturally occurring, soft, siliceous sedimentary rock that is easily crumbled into a fine white to off-white powder. It typically has a particle size ranging from less than 3 µm to more than 1 mm, but typically 10 to 200 µm. Depending on the granularity, this powder can have an abrasive feel and has a low density as a result of its high porosity. The typical chemical composition of oven-dried naturally occurring diatomaceous earth is 80 to 90% silica, with 2 to 4% alumina (attributed mostly to clay minerals) and 0.5 to 2% iron oxide. Diatomaceous earth consists of fossilized remains of diatoms, a type of hard-shelled algae. In the context of the present application with claims, it should be understood that "diatomaceous earth" refers to the naturally occurring form, i.e. without prior calcination or the like. For example, prior calcination of diatomaceous earth at temperatures of 1140 °C or higher will cause destruction of the micro-porous structure of the diatomaceous earth (mainly amorphous silica) and is believed to facilitate crystallisation of the otherwise amorphous silica into e.g. the cristobalite crystalline form of silica and thereby compromise the beneficial properties of (native) diatomaceous earth, e.g. with respect to low thermal conductivity.

As mentioned above, the diatomaceous earth typically constitutes 50-95 wt.%, such as 60-90 wt.%, or 60-85 wt.%, in particular 70-80 wt.% or alternatively 75-90 wt.%, of the base material.

In order for the insulating body to exhibit excellent insulating properties, it is preferred that the diatomaceous earth constitutes a fairly large proportion thereof, e.g. such that the amount of diatomaceous earth relative to the total mass of the insulating body is typically 40-95 wt.% wt.%, such as 40-80 wt.%, or 40-70 wt.%, in particular 45-65 wt.% or alternatively 40-50 wt.%, of the insulating body.

The insulating body also comprises a binder, typically selected from a clay binder (e.g. bentonite, kaolin, halloysite, illite, and attapulgite), burned lime (CaO) with dextrin, cement, plaster (CaSO₄), etc. In currently preferred embodiments, the binder is a clay binder.

As mentioned above, the binder typically constitutes 5-50 wt.%, such as 10-40 wt.%, or 15-40 wt.%, in particular 20-30 wt.% or alternatively 10-25 wt.%, of the base material.

In some embodiments, the base material may also - in addition to (a) the diatomaceous earth and (b) the binder - comprise (c) one or more fillers in an amount of 5-25 wt.%, such as 10-25 wt.%, of the base material.

Typical examples of fillers are those which in themselves have a high temperature resistance (i.e. a high melting point), and which are not considered as binders, e.g. Al₂O₃, ZrO₂, SiC, mullite (2Al₂O₃·SiO₂), etc.

Insofar that a filler is considered, the base material typically consists of (a) diatomaceous earth in an amount of 50-90 wt.%, such as 55-85 wt.%, or 55-80 wt.%, in particular 65-75 wt.% or alternatively 70-85 wt.%, of the base material; (b) the binder in an amount of 5-45 wt.%, such as 10-35 wt.%, or 15-35 wt.%, in particular 20-30 wt.% or alternatively 10-25 wt.%, of the base material, and (c) one or more fillers in an amount of 0-25 wt.%, e.g. 5-25 wt.%, such as 10-25 wt.%, of the base material; wherein the sum of these constituents is 100 %.

The combination of the diatomaceous earth, the binder and any filler(s) is referred to as the base material. The base material typically constitutes 75-98 wt.%, e.g. 80-95 wt.%, such as 80-90 wt.%, of the insulating body.

In some very interesting embodiments, the combination of the diatomaceous earth and binder (mainly in the form of clay) can be obtained from natural sources, e.g. in the form of moler. In some natural sources of diatomaceous earth the binder is already included in form of clay mainly consisting of bentonite. Since most clay include silica and are highly amorphous it can be difficult to distinguish between the clay and diatomaceous earth. However in most natural occurring resources of diatomaceous earth, the inclusion of some clay or binder is necessary in order to form a solid material. The typical combination of such clay material (i.e. a binder) and diatomaceous earth is such that the relative weight of the diatomaceous earth to the weight of the binder is in the range of 98:2 to 65:35 such as 90:10 to 75:25.

It should be understood that any amounts of clay or other binders present in natural deposits of diatomaceous earth should - for calculation purposes - be regarded as a part of the binder when reference is made to the percentages provided herein for the diatomaceous earth and the binder.

The insulating body also comprises as a mandatory component (d) a metal-masking agent. The amount of the metal-masking agent is for economical reasons adjusted to the amount of the relevant metals (iron, aluminium, calcium and magnesium) so as on the one hand to be sufficient to mask a significant amount of at least iron, and on the other hand not be too excessive whereby the nature of the insulating body might change significantly. Typically, the molar equivalent ratio between the metal-masking agent (for example a phosphate) and the combined amount of metals selected from iron (Fe₂O₃), aluminium (Al₂O₃), calcium (CaO) and magnesium (MgO) in the base material of at least 30:100, such as in the range of 30:100 to 150:100, or in the range of 30:100 to 130:100, e.g. in the range of 50:100 to 120:100, in particular in the range of 80:100 to 110:100.

Pure silica insulating bodies, i.e. bodies with a SiO₂ content of more than 93 %, are known to have a maximum service temperature of 1650°C. Since the most abundant constituent of diatomaceous earth insulating bodies is SiO₂, the maximum service temperature should in principle be as high as 1650°C. However, it appears that different impurities such as iron (mainly as Fe₂O₃) tend to act as a flux agent which causes softening or melting of the base material (SiO₂).

In the insulating bodies of the present invention, these impurities (in particular iron) are "masked" by means of a metal-masking agent, i.e. the metal-masking agent is allowed to react with iron (and other metal impurities) present in the raw materials, whereby the impurities are converted to other chemical species having a higher chemical stability at increased temperatures. The meaning of high chemical stability is meant as chemical compound being able to withstand temperatures of at least 1050°C.

A particular example of one such chemical species could be the phosphate ion, which is well known to form an insoluble precipitation with iron and other metals under acidic conditions. The chemical compound FePO₄ has high temperature resistance and can thereby pacify the content of iron and other metals of insulating body, until the stage where FePO₄ decomposes.

Various metal-masking agents can be used, including those of the phosphate-type, such as those selected from phosphates, e.g. sodium triphosphate, sodium phosphate, sodium pyrophosphate, sodium hexametaphosphoate, monobasic potassium phosphate, potassium phosphate, aluminium dihydrogen phosphate, diphosphates (pyrophosphates), triphosphates, metaphosphates, mono ammonium phosphate, mixed phosphate salts, phosphine, phosphine oxide, phosphinites (P(OR)R₂), phosphonites (P(OR)₂R), phosphites (P(OR₃), phosphinates (OP(OR)R₂), and phosphonates (OP(OR)₂). Currently preferred examples are aluminium dihydrogen phosphate and mono ammonium phosphate.

When the metal-masking agent is a phosphate, it is believed that at least 40 %, such as at least 60 %, or even at least 80 %, in particular at least 90 %, of the metals in the insulating body is present as metal phosphates, including Mg₃(PO₄)₂, Ca₃(PO₄)₂, AlPO₄, FePO₄. The amount can be determined by X-ray diffraction, Raman spectroscopy or by quantitative analysis. In particular, at least 60 %, such as at least 70 %, or even at least 80 %, in particular at least 90 %, of the iron in the insulating body is present as iron phosphate (FePO₄).

Besides the reduced degree of shrinkage, the insulating body typically also exhibits excellent properties with regards to compressive strength compared to conventional fired diatomite insulating bodies. Hence, in some embodiments, the compressive strength of the insulating body is at least 0.5 MPa, such as at least 1 MPa, or at least 5 MPa, e.g. in the range of 1-30 MPa, or in the range of 5-25 MPa, or in the range of 10-30 MPa, or in the range of 1-5 MPa. Compressive strength is determined as described further below.

In one particular embodiment, the insulating body comprises a base material of (a) 60-90 wt.% of diatomaceous earth, (b) 10-40 wt.% of a binding agent, and optionally (c) one or more fillers; wherein the content of metals selected from iron (Fe₂O₃), aluminium (Al₂O₃), calcium (CaO) and magnesium (MgO) in the base material is at least 0.5 wt.%, and the insulating body further comprises a metal-masking agent, and wherein the diatomaceous earth constitutes at least 50% of the insulating body.

### Embodiments

The following represent certain preferred embodiment of the invention:
(a) A fired diatomite insulating body comprising a base material of: (a) 60-90 wt.% of diatomaceous earth, (b) 10-40 wt.% of a clay binder, and optionally (c) one or more fillers; wherein the content of metals selected from iron (Fe₂O₃), aluminium (Al₂O₃), calcium (CaO) and magnesium (MgO) in the base material is in the range of 0.5-30 wt.%, and wherein the insulating body further comprises (d) a metal-masking agent; said insulating body exhibiting less than 2 % of linear shrinkage after heating to 1200°C for 12 hours (EN 1094-6:1999). Typically, the molar equivalent ratio between the metal-masking agent (for example a phosphate) and the combined amount of metals selected from iron (Fe₂O₃), aluminium (Al₂O₃), calcium (CaO) and magnesium (MgO) in the base material is at least 30:100, such as in the range of 30:100 to 150:100, or in the range of 30:100 to 130:100, e.g. in the range of 50:100 to 120:100, in particular in the range of 80:100 to 110:100.
(b) A fired diatomite insulating body comprising a base material of: (a) 60-90 wt.% of diatomaceous earth, (b) 10-40 wt.% of a clay binder, and optionally (c) one or more fillers; wherein the content of metals selected from iron (Fe₂O₃), aluminium (Al₂O₃), calcium (CaO) and magnesium (MgO) in the base material is in the range of 0.5-30 wt.%, and wherein the insulating body further comprises (d) a metal-masking agent, and wherein the molar equivalent ratio between the metal-masking agent and the metals is in the range of 30:100 to 150:100, or in the range of 30:100 to 130:100, e.g. in the range of 50:100 to 120:100, in particular in the range of 80:100 to 110:100.
(C) A fired diatomite insulating body prepared by firing a combination of base material of: (a) 50-95 wt.%, such as 60-90 wt.%, of diatomaceous earth, (b) 5-10 wt.%, such as 10-40 wt.%, of a clay binder, and optionally (c) one or more fillers, wherein the content of metals selected from iron (Fe₂O₃), aluminium (Al₂O₃), calcium (CaO) and magnesium (MgO) in the base material is in the range of 0.5-30 wt.%; and (d) a metal-masking agent, at a temperature in the range of 800-1200 °C, such as 900-1150 °C, or 1000-1200 °C, possibly using a temperature gradient. In some variant, wherein the molar equivalent ratio between the metal-masking agent and the metals is in the range of 30:100 to 150:100, or in the range of 30:100 to 130:100, e.g. in the range of 50:100 to 120:100, in particular in the range of 80:100 to 110:100.

In these embodiments, the metal-masking agent is preferably selected from aluminium dihydrogen phosphate and mono ammonium phosphate.

### Manufacture of fired diatomite insulating bodies

It is believed that in order to provide best possible temperature resistance and low thermal conductivity at high temperatures, i.e. highest possible maximum service temperature, as much of the metal constituents (in particular iron) must be bound (e.g. as phosphate) as possible. The minimum amount of the metal-masking agent (e.g. phosphate), that advantageously is added can be calculated from the molar content of metals selected from iron (Fe₂O₃), aluminium (Al₂O₃), calcium (CaO) and magnesium (MgO) in the base material (i.e. the combination of the diatomaceous earth, the binder and any filler). The molar metal content can be obtained from a XRF. The metal-masking agent is preferably added in an approximately molar equivalent amount, e.g. such that the molar equivalent ratio between the metal-masking agent and metals (including iron) is in the range of 30:100 to 130:100 as specified further above. Given the molar mass of the selected metal masking agent (e.g. a phosphate compound) the mass of the needed amount of the metal-masking agent can then calculated.

Depending on the base material, the metal-masking agent can then be brought into reaction with the metals. Most iron and other metals are not suitable for reaction with phosphate, but bound as oxides or sulphides. This means that the iron and other metals must be brought to react with phosphate at elevated temperatures such in a furnace, rotating kiln or in a reaction vessel.

One such process would be to make a suspension with the base material and the metal-masking agent in water using a vessel with a stirring device. The suspension is then heated and depending on the wanted reaction speed, the vessel can be heated accordingly. Boiling the suspension will give a reaction time of 24-48 hours depending on metal-masking agent. Lowering the temperature will result in a longer reaction time e.g. 3-5 days. A variation of this process would be to have the base material wetted with water, but not suspended in water. The advantage of this variation would be the elimination of the filtration of the base material from the suspension.

Another such process would be to mix the base material and metal-masking agent and then extrude the material and cutting the extruded mass into bricks. In order to get the metal-masking agent reacted with the iron and other metals, the bricks must be kept in humid atmosphere and at a high temperature. The reaction time would usually be longer than reacting the material in boiling conditions such as 3-5 days, but in some embodiment just at least 24 hours, such as at least 36 hours, e.g. at least 2 days.

Yet another such process would be to mix the base material, metal-masking agent and some water to create a granulate material. The granulate is then heated in an electric furnace or rotating kiln at temperature depending on the composition of base material and metal-masking agent to 500-1200°C such as 800-1000°C. The granulate material is then ground and mix with a binder and water to form a brick either extruding or by drying in mould.

In some interesting embodiment, a combustible filler is included so as to provide macropores in the insulating body. An example hereof is saw dust which typically have a size of not larger than 6 mm, such as not larger than 5 mm, or in the preferred embodiment not larger than 3 mm.

Hence, the present invention also provides a method of manufacture of a fired diatomite insulating body as defined herein, the method comprising:
(A) heating a suspension of the base material and the metal-masking agent, preferably for at least 12 hours, to a temperature of at least 60 °C, preferably to a temperature of at least 80°C; filtering the suspension; subsequently shaping the filtered material into shaped a body, and firing said shaped body so as to obtain the insulating body; or
(B) mixing the base material and the metal-masking agent, shaping the mixture into a shaped body, and maintaining the shaped body in humid atmosphere (80 %RH or more) for at least 24 hours, such as at least 36 hours, e.g. at least 2 days or at least 3 days; and firing said shaped body so as to obtain the insulating body; or
(C) mixing the base material including a part of the binder, the metal-masking agent and water so as to form a granulate material; heating the granulate material to a temperature of 500-1200 °C, such as 800-1000 °C, or 900-1200 °C; grinding the granulate material and mixing the grinded material with the remaining portion of the binder and water; shaping the mixture into a shaped body, and firing said shaped body so as to obtain the insulating body.

The firing is typically conducted at temperatures in the range of 800-1200 °C, such as 900-1150 °C, or 1000-1200 °C, possibly using a temperature gradient. The firing temperature is typically 50-400 °C below the maximum service temperature of the resulting insulating body.

### Use of fired diatomite insulating bodies

The present invention also provides the use of the novel fired diatomite insulating body defined herein for example in high temperature industries such as iron, base metal, lime, cement, petrochemical and glass industries. In these industries, at least in one production step or part the insulation material is exposed to temperatures higher than 1000°C. An example of this could be the steel ladles, where molten iron is kept at temperatures of 1500°C and insulation layer is exposed to temperatures in the range of 1300-1200°C. An other example would be the insulation in rotating kilns were the clinkers are fired at 1400°C and the insulation barrier is exposed to temperatures of 1200°C.

Hence, the fired diatomite insulating bodies described herein may be used as an insulation material being exposed to temperatures of at least 1200°C, such as temperature of at least 1300°C, or at least 1400°C, or even at least 1500°C. The exposure is not believed to be transient, but is typically believe to be for at least 6 hours, such as at least 12 hours.

### General remarks

Although the present description and claims occasionally refer to a body, a binder, an agent, etc., it should be understood that the products and methods defined herein may comprise one, two or more types of the individual constituents or elements. In the embodiments wherein two or more different constituents are present, the total amount of the respective constituents should correspond to the amount defined herein for the individual constituent.

The "(s)" in the expressions: binder(s), agents (s), etc. indicates that one, two or more types of the individual constituents or elements may be present. On the other hand, when the expression "one" is used, only one (1) of the respective constituent or element is present.

Throughout the specification the word "comprise", or variations such as "comprising" or "comprises", will be understood to imply the inclusion of a stated element, integer or step, or groups of elements, integers or steps, but not the exclusion of any other element, integer or step, or groups of elements, integers or steps.

### WORKING EXAMPLES

### Materials

Moler obtained from Fur (a Danish island); diatomaceous earth and bentonite in an approximate 80:20 weight ratio; iron content approx. 5 %; metal content approx. 20 % (calculated as metal oxides selected from iron (Fe₂O₃), aluminium (Al₂O₃), calcium (CaO) and magnesium (MgO)).

Sawdust from a local sawmill.
Aluminium dihydrogen phosphate (Al(H₂PO₄)₃) (Budenheim FBB 32).
Mono ammonium phosphate (NH₄H₂PO₄) technical grade from local fertilizer company.

### Analytical methods

### Determination of linear shrinkage of insulating bodies

Linear shrinkage of the insulating bodies was determined according to EN 1094-6:1999 (*Insulating Refractory Products* - *Part 6: Determination Of Permanent Change In Dimensions Of Shaped Products On Heating*) after heating to the target temperature (e.g. 1200°C) for a predetermined period of time (e.g. 12 hours).

### Determination of compressive strength of insulating bodies

The compressive strength of the insulating bodies was determined according to DS/EN ISO 8895:2006 (*Shaped insulating refractory products. Determination of cold crushing strength*).

### Determination of thermal conductivity

Thermal conductivity was measured using a Hot Disc TPS 2500 S apparatus, Hot Disc AB, Sweden, conducting measurements at 200 °C, 500 °C and 700 °C.

### XRF determination of the metal content

The metal content of a material (e.g. diatomaceous earth, a binder, a filler, or a mixture thereof) can be determined by X-ray fluorescence, e.g. as described in the following:
XRF is characterized by the emission and the detection of X-rays from the test material after (during) it has been subjected to X-rays. The typical XRF equipment (and used further in this text) is the energy dispersive (EDXRF). EDXRF measures the different energies of the characteristic radiation coming from the test material. The detector can separate the radiation from the sample into radiation from the elements in test material. Different types of XRF such as wavelength dispersive systems (WDXRF) and synchrotron can deliver even more precise measurements. The EDXRF delivers sufficient precise measurements for the use of estimating the amount needed for the iron pacifying agent and other measurements described herein. The preferred measuring mode is to measure directly on powder of the material, although more precise measurements can be done making a fused bead. This is not necessary, for the use of estimating the amount needed for the iron pacifying agent and other measurements described herein. The XRF measuring device used herein was the epsilon 3 from PANanalytical, other devices (properly calibrated) will result in the measurement within +/- 0.2 wt%, which is deemed sufficient precise for the herein described application.

### Example 1 - Preparation of moler-based insulating bodies

### - for illustration purposes only, not according to the invention

2.5 kg of moler and 0.25 kg of sawdust were mixed in an Eirich mixer adding portions of approx. 0.2 kg mono ammonium phosphate (to a total of 1.7 kg) and mixing the material at 1200 rpm for 2 min for each addition of mono aluminium phosphate. This composition contains 2.0 mmol Fe and 5.85 mmol P. The surplus of P is used as phosphate anion to bind other metals (aluminium, calcium and magnesium) in the base material.

The mixed mass was put into a brick mould and moulded by hand into a brick form. The wet brick was taken out of the mould and dried at 50°C for 24 h. The brick was dried further at 110°C for 6 hours. The elevated temperature also serves as suitable reaction conditions, where the phosphate can react with the metals (primarily iron) to form metal phosphates (including FePO₄) until the brick is dry. At this point the reaction stops since solid-solid reactions are very slow at room temperature. The brick was then fired in an electrical furnace by heating at 110°C for 1 hour, at 300°C for ½ hour, at 500°C for 1 hour, at 700°C for ½ hour, at 900°C for 6 hours and finally at 1000°C for 6 hours.

The brick was tested according to EN 1094-6:1999 at 1400°C for 12 hours. The linear shrinkage was measured to less than 1 % (-0.15 %).

### Example 2

100 g of moler was suspended in 400 mL of a 50 % aqueous solution of Al(H₂PO₄)₃ (FBB 32 Budenheim). The suspension was heated to boil and kept under stirring for 48 hours. The suspension was then filtered of and washed with water. The wet filter cake was then formed into a small brick and dried for 24 hours at 50°C and then at 110°C for 6 hours. The brick was heated to 1000°C with a ramp of 4°C/min.

The chemical composition of the brick was found by powder XRF to be:

| **Results** | | **Units** | | Atoms | |
|---|---|---|---|---|---|
| | | (in weight) | | Molar content of 100 g test sample | |
| Silicon Dioxide | SiO₂ | % | 48.000 | 0.7989 | Si |
| Titanium Dioxide | TiO₂ | % | 0.767 | 0.0095 | Ti |
| Aluminium Oxide | Al₂O₃ | % | 17.000 | 0.3334 | Al |
| Iron (III) Oxide | Fe₂O₃ | % | 5.000 | 0.0626 | Fe |
| Calcium Oxide | CaO | % | 0.539 | 0.0096 | Ca |
| Magnesium Oxide | MgO | % | 0.360 | 0.0089 | Mg |
| Potassium Oxide | K₂O | % | 0.146 | 0.0030 | K |
| Sodium Oxide | Na₂O | % | 0.000 | 0.0 | Na |
| Phosphorus Pentoxide | P₂O₅ | % | 28.000 | 0.3945 | P |

| **Molar ratios** | | | | | |
|---|---|---|---|---|---|
| Fe/P ratio | | | | 0.15 | |
| Metal/P ratio | | | | 1.08 | |

The brick was tested according to EN 1094-6:1999 at 1400°C for 12 hours. The linear shrinkage was measured to less than 2%.

### Example 3

2.5 kg of moler and 0.25 kg of sawdust were mixed in an Eirich mixer adding 0.4 kg mono ammonium phosphate dissolved in 1.7 L water and mixing the material at 1200 rpm for 2 min. Further 0.25 kg of mono ammonium phosphate suspended in 0.3 L water was added and the material was mixed at 1200 rpm for 2 min. This composition contains 2.0 mmol Fe and 5.65 mmol P per 100 g of dry moler. The surplus of P is used as phosphate anion to bind other metal ions (aluminium, calcium, magnesium) in the base material.

The mixed mass was put into a brick mould and moulded by hand into a brick form. The wet brick was taken out of the mould and dried at 50°C for 24 h. The brick was dried further at 110°C for 6 hours. The elevated temperature also serves as suitable reaction conditions, where the phosphate can react with the metals (primarily iron) to form metal phosphates (including FePO₄) until the brick is dry. At this point the reaction stops since solid-solid reactions are very slow at room temperature. The brick was then fired in an electrical furnace by heating at 110°C for 1 hour, at 300°C for ½ hour, at 500°C for 1 hour, at 700°C for ½ hour, at 900°C for 6 hours and finally at 1000°C for 6 hours.

The brick was tested according to EN 1094-6:1999 at 1200°C for 12 hours. The linear shrinkage was measured to less than 1 % (0.02 %).

### Example 4

10,000 kg of moler and 350 kg mono aluminium phosphate were mixed with 1800 kg of sawdust in a continuous mixing machine where water was added until a water/dry brick matter relation of 1.1 was attained. The clay like mixture was heated to (60 °C) was fed into an extruder and bricks were sliced from the extruded clay mixture. The bricks were put in a closed chamber were the humidity was kept at least 95 % for 24 hours. The temperature was kept at 50 °C in this stage and then over time period of additional 24 hours increased to 110 °C. The dried bricks were then put in a tunnel oven at a peak temperature of 980 °C and then kept for 800 min at 980 °C.

The brick was tested according to EN 1094-6:1999 at 1100°C for 12 hours. The linear shrinkage was measured to less than 2 %.

### Example 5

10,000 kg of moler and 350 kg mono aluminium phosphate were mixed with 1800 kg of sawdust in a continuous mixing machine where water was added until a water/dry brick matter relation of 1.1 was attained. The clay like mixture was fed into an extruder and bricks were sliced from the extruded clay mixture. The bricks were put in a closed chamber were the humidity was kept at least 95 % for 24 hours. The temperature was kept at 50 °C in this stage and then over time period of additional 24 hours increased to 110 °C. The dried bricks were then put in a tunnel oven at a peak temperature of 980 °C and then kept for 800 min at 980 °C. The bricks were then heated to 1150 °C in an electric furnace for 4 hours.

The brick was tested according to EN 1094-6:1999 at 1200 °C for 12 hours. The linear shrinkage was measured to less than 2 %.

### Example 6

A commercial POROS brick from Skamol (corresponding to the moler brick prepared in Example 5, but prepared without addition of mono aluminium phosphate, and fired at 1150 °C as in Example 5) was heated to 1200 °C for 6 hours. The brick linear shrinkage was measured to 20 %.

### Example 7

The thermal conductivity of the bricks according to Example 5 and Example 6 was compared. The results are shown in Figure 1.

The results show that thermal conductivity of the conventional POROS moler brick (Example 6) is significantly higher than that the moler brick according to the invention (Example 5), just as the slope for the moler brick according to the invention (Example 5) is lower than for the conventional moler brick (Example 6). For example, at 700 °C, the thermal conductivity of the conventional moler brick is about twice that of the moler brick according to the invention.

The results indicate that the micro-porous structure of the diatomaceous earth of the moler in the conventional moler brick (Example 6) has deteriorated in the firing process, whereas the micro-porosity of the diatomaceous earth in the moler brick according to the invention (Example 5) is preserved due to the presence of a metal-masking agent (such as mono aluminium phosphate).The results are also indicative for the deterioration of the micro-porosity of the diatomaceous earth used in US 3,793,042 A upon calcination where the generally amorphous silica is transformed into the cristobalite polymorph form.

## Claims

1. A fired diatomite insulating body comprising a base material of: (a) 50-95 wt.% of diatomaceous earth in the naturally occurring, non-calcined form, (b) 5-50 wt.% of a binder, and optionally (c) one or more fillers; wherein the content of metals selected from iron (Fe₂O₃), aluminium (Al₂O₃), calcium (CaO) and magnesium (MgO) in the base material is at least 0.5 wt.%, and wherein the insulating body further comprises (d) a metal-masking agent selected from aluminium dihydrogen phosphate and mono ammonium phosphate, and
wherein the molar equivalent ratio between the metal-masking agent and said metals, i.e the ratio between the molar contents of phosphorous (P) in the metal-masking agent and the sum of the molar contents of said metal atoms, is at least 30:100; and/or
wherein said insulating body exhibits less than 2 % of linear shrinkage after heating to 1200°C for 12 hours (EN 1094-6:1999).

2. The insulating body according to claim 1, wherein at least 70 % of the iron in the fired insulating body are present as FePO₄.

3. The insulating body according to any one of the preceding claims, wherein the molar equivalent ratio between the metal-masking agent and said metals is in the range of 30:100 to 150:100.

4. The insulating body according to any one of the preceding claims, which exhibits less than 2 % of shrinkage after heating to 1400°C for 12 hours (EN 1094-6:1999).

5. The insulating body according to any one of the preceding claims which has as volume of at least 100 cm³.

6. The insulating body according to any one of the preceding claims, wherein the insulating body comprises a base material of: (a) 60-90 wt.% of diatomaceous earth in the naturally occurring, non-calcined form, (b) 10-40 wt.% of a binding agent, and optionally (c) one or more fillers; wherein the content of metals selected from iron (Fe₂O₃), aluminium (Al₂O₃), calcium (CaO) and magnesium (MgO) in the base material is in the range of 0.5-30 wt.%, and wherein the insulating body further comprises (d) a metal-masking agent selected from aluminium dihydrogen phosphate and mono ammonium phosphate.

7. The insulating body according to any one of the preceding claims, wherein the base material consists of (a) diatomaceous earth in the naturally occurring, non-calcined form in an amount of 55-85 wt.% of the base material; (b) the binder in an amount of 10-35 wt.% of the base material, and (c) one or more fillers in an amount of 5-25 wt.% of the base material; wherein the sum of these constituents is 100 %.

8. The use of a fired diatomite insulating body as defined in any one of the preceding claims as an insulation material being exposed to temperatures of at least 1200°C for at least 6 hours.

9. A method of manufacture of a fired diatomite insulating body as defined in any one of the claims 1-6, the method comprising:
(A) heating a suspension of the base material and the metal-masking agent for at least 12 hours to a temperature of at least 60 °C; filtering the material; subsequently shaping the filtered material into a shaped body, and firing said shaped body at a temperature in the range of 800-1200 °C so as to obtain the insulating body; or
(B) mixing the base material and the metal-masking agent, shaping the mixture into a shaped body, and maintaining the shaped body in humid atmosphere (80 %RH or more) for at least 24 hours; and firing said shaped body at a temperature in the range of 800-1200 °C so as to obtain the insulating body; or
(C) mixing the base material including a part of the binder, the metal-masking agent and water so as to form a granulate material; heating the granulate material, to a temperature of 800-1000 °C, grinding the granulate material and mixing the grinded material with the remaining portion of the binder and water; shaping the mixture into a shaped body, and firing said shaped body at a temperature in the range of 800-1200 °C so as to obtain the insulating body.

## Patentansprüche

1. Gebrannter Diatomit-Isolierkörper, umfassend ein Ausgangsmaterial von: (a) 50-95 Gew.-% von Diatomeenerde in der natürlich vorkommenden, nicht-calcinierten Form, (b) 5-50 Gew.-% eines Bindemittels, und gegebenenfalls (c) einen oder mehrere Füllstoffe; wobei der Gehalt an Metallen, ausgewählt aus Eisen (Fe₂O₃), Aluminium (Al₂O₃), Calcium (CaO) und Magnesium (MgO), in dem Ausgangsmaterial zumindest 0,5 Gew.-% beträgt, und wobei der Isolierkörper ferner (d) ein Metallmaskierungsmittel umfasst, ausgewählt aus Aluminiumdihydrogenphosphat und Monoammoniumphosphat, und
wobei das Moläquivalentverhältnis zwischen dem Metallmaskierungsmittel und den Metallen, d. h. das Verhältnis zwischen dem Molgehalt von Phosphor (P) in dem Metallmaskierungsmittel und der Summe der Molgehalte der Metallatome, zumindest 30:100 beträgt; und/oder
wobei der Isolierkörper weniger als 2 % lineare Schrumpfung nach einem Erhitzen auf 1200 °C über 12 Stunden zeigt (EN 1094-6:1999).

2. Isolierkörper nach Anspruch 1, wobei zumindest 70 % des Eisens in dem gebrannten Isolierkörper als FePO₄ vorhanden sind.

3. Isolierkörper nach einem der vorhergehenden Ansprüche, wobei das Moläquivalentverhältnis zwischen dem Metallmaskierungsmittel und den Metallen in dem Bereich von 30:100 bis 150:100 liegt.

4. Isolierkörper nach einem der vorhergehenden Ansprüche, der weniger als 2 % Schrumpfung nach einem Erhitzen auf 1400 °C über 12 Stunden zeigt (EN 1094-6:1999).

5. Isolierkörper nach einem der vorhergehenden Ansprüche, der ein Volumen von zumindest 100 cm³ aufweist.

6. Isolierkörper nach einem der vorhergehenden Ansprüche, wobei der Isolierkörper ein Ausgangsmaterial aus den Folgenden umfasst: (a) 60-90 Gew.-% von Diatomeenerde in der natürlich vorkommenden, nicht-calcinierten Form, (b) 10-40 Gew.-% eines Bindemittels, und gegebenenfalls (c) einen oder mehreren Füllstoffen; wobei der Gehalt an Metallen, ausgewählt aus Eisen (Fe₂O₃), Aluminium (Al₂O₃), Calcium (CaO) und Magnesium (MgO), in dem Ausgangsmaterial in dem Bereich von 0,5-30 Gew.-% liegt, und wobei der Isolierkörper ferner (d) ein Metallmaskierungsmittel umfasst, ausgewählt aus Aluminiumdihydrogenphosphat und Monoammoniumphosphat.

7. Isolierkörper nach einem der vorhergehenden Ansprüche, das Ausgangsmaterial bestehend aus (a) Diatomeenerde in der natürlich vorkommenden, nicht-calcinierten Form in einer Menge von 55-85 Gew.-% des Ausgangsmaterials; (b) dem Bindemittel in einer Menge von 10-35 Gew.-% des Ausgangsmaterials, und (c) einem oder mehreren Füllstoffen in einer Menge von 5-25 Gew.-% des Ausgangsmaterials; wobei die Summe dieser Bestandteile 100 % beträgt.

8. Verwendung eines gebrannten Diatomit-Isolierkörpers nach einem der vorhergehenden Ansprüche als ein Isolierungsmaterial, das Temperaturen von zumindest 1200 °C über zumindest 6 Stunden ausgesetzt wird.

9. Verfahren zur Herstellung eines gebrannten Diatomit-Isolierkörpers nach einem der Ansprüche 1-6, wobei das Verfahren Folgendes umfasst:
(A) Erhitzen einer Suspension des Ausgangsmaterials und des Metallmaskierungsmittels über zumindest 12 Stunden auf eine Temperatur von zumindest 60 °C; Filtern des Materials; nachfolgendes Formen des gefilterten Materials zu einem geformten Körper, und Brennen des geformten Körpers bei einer Temperatur in dem Bereich von 800-1200 °C, um so den Isolierkörper zu erlangen; oder
(B) Mischen des Ausgangsmaterials und des Metallmaskierungsmittels, Formen des Gemischs zu einem geformten Körper, und Aufrechterhalten des geformten Körpers in einer feuchten Atmosphäre (80 % rF oder mehr) über zumindest 24 Stunden; und Brennen des geformten Körpers bei einer Temperatur in dem Bereich von 800-1200 °C, um so den Isolierkörper zu erlangen; oder
(C) Mischen des Ausgangsmaterials, beinhaltend einen Teil des Bindemittels, das Metallmaskierungsmittel und Wasser, um so ein Granulatmaterial zu bilden; Erhitzen des Granulatmaterials auf eine Temperatur von 800-1000 °C, Mahlen des Granulatmaterials und Mischen des gemahlenen Materials mit dem restlichen Teil des Bindemittels und Wasser; Formen des Gemischs zu einem geformten Körper, und Brennen des geformten Körpers bei einer Temperatur in dem Bereich von 800-1200 °C, um so den Isolierkörper zu erlangen.

## Revendications

1. Corps isolant en diatomite cuite comprenant un matériau de base de : (a) 50 à 95 % en poids de terre de diatomée sous la forme non calcinée, apparaissant dans la nature, (b) 5 à 50 % en poids d'un liant, et facultativement (c) une ou plusieurs charges ; dans lequel la teneur en métaux sélectionnés parmi le fer (Fe₂O₃), l'aluminium (Al₂O₃), le calcium (CaO) et le magnésium (MgO) dans le matériau de base est d'au moins 0,5 % en poids, et dans lequel le corps isolant comprend en outre (d) un agent de masquage des métaux sélectionné parmi le dihydrogénophosphate d'aluminium et le monophosphate d'ammonium, et
dans lequel le rapport d'équivalents molaires entre l'agent de masquage des métaux et lesdits métaux, à savoir le rapport entre les teneurs en moles en phosphore (P) dans l'agent de masquage des métaux et la somme des teneurs en moles en lesdits atomes de métaux, est d'au moins 30/100 ; et/ou
dans lequel ledit corps isolant révèle moins de 2 % de rétraction linéaire après un chauffage à 1 200 °C pendant 12 heures (EN 1094-6/1999).

2. Corps isolant selon la revendication 1, dans lequel au moins 70 % du fer dans le corps isolant cuit sont présents comme du FePO₄.

3. Corps isolant selon l'une quelconque des revendications précédentes, dans lequel le rapport d'équivalents molaires entre l'agent de masquage des métaux et lesdits métaux est dans la plage de 30/100 à 150/100.

4. Corps isolant selon l'une quelconque des revendications précédentes, qui manifeste moins de 2 % de rétraction après un chauffage à 1 400 °C pendant 12 heures (EN 1094-6/1999).

5. Corps isolant selon l'une quelconque des revendications précédentes qui a un volume d'au moins 100 cm³.

6. Corps isolant selon l'une quelconque des revendications précédentes, dans lequel le corps isolant comprend un matériau de base de : (a) 60 à 90 % en poids de terre de diatomée sous la forme non calcinée, apparaissant dans la nature, (b) 10 à 40 % en poids d'un agent de liaison, et facultativement (c) une ou plusieurs charges ; dans lequel la teneur en métaux sélectionnés parmi le fer (Fe₂O₃), l'aluminium (Al₂O₃), le calcium (CaO) et le magnésium (MgO) dans le matériau de base est dans la plage de 0,5 à 30 % en poids, et dans lequel le corps isolant comprend en outre (d) un agent de masquage des métaux sélectionné parmi le dihydrogénophosphate d'aluminium et le monophosphate d'ammonium.

7. Corps isolant selon l'une quelconque des revendications précédentes, dans lequel le matériau de base est constitué par (a) de la terre de diatomée sous une forme non calcinée, apparaissant dans la nature dans une quantité de 55 à 85 % en poids du matériau de base ; (b) le liant dans une quantité de 10 à 35 % en poids du matériau de base, et (c) une ou plusieurs charges dans une quantité de 5 à 25 % en poids du matériau de base ; dans lequel la somme de ces constituants est 100 %.

8. Utilisation d'un corps isolant en diatomite cuite selon l'une quelconque des revendications précédentes comme un matériau d'isolation étant exposé à des températures d'au moins 1200 °C pendant au moins 6 heures.

9. Procédé de fabrication d'un corps isolant en diatomite cuite selon l'une quelconque des revendications 1 à 6, le procédé comprenant :
(A) le chauffage d'une suspension du matériau de base et de l'agent de masquage des métaux pendant au moins 12 heures à une température d'au moins 60 °C ; la filtration du matériau ; puis le façonnage du matériau filtré en un corps façonné, et la cuisson dudit corps façonné à une température de 800 à 1 200 °C de manière à obtenir le corps isolant ; ou
(B) le mélange du matériau de base et de l'agent de masquage des métaux, le façonnage du mélange en un corps façonné, et le maintien du corps façonné dans une atmosphère humide (HR de 80 % ou plus) pendant au moins 24 heures ; et la cuisson du corps façonné à une température dans la plage de 800 à 1 200 °C de manière à obtenir le corps isolant ; ou
(C) le mélange du matériau de base incluant une partie du liant, de l'agent de masquage des métaux et d'eau de manière à former un matériau granulaire ; le chauffage du matériau granulaire, à une température de 800 à 1 000 °C, le broyage du matériau granulaire et le mélange du matériau broyé avec la partie restante du liant et de l'eau ; le façonnage du mélange en un corps façonné, et la cuisson dudit corps façonné à une température dans la plage de 800 à 1 200 °C de manière à obtenir le corps isolant.
